(19) Europäisches Patentamt
European Patent Office
Office européen des brevets

(11) EP 1 654 291 B1

(12) EUROPÄISCHE PATENTSCHRIFT

(45) Veröffentlichungstag und Bekanntmachung des Hinweises auf die Patenterteilung:
**17.10.2007 Patentblatt 2007/42**

(21) Anmeldenummer: **04740777.0**

(22) Anmeldetag: **08.07.2004**

(51) Int Cl.:
***C08F 2/22*** (2006.01)

(86) Internationale Anmeldenummer:
**PCT/EP2004/007470**

(87) Internationale Veröffentlichungsnummer:
**WO 2005/016977 (24.02.2005 Gazette 2005/08)**

# (54) VERFAHREN ZUR HERSTELLUNG WÄSSRIGER POLYMERISATDISPERSIONEN

METHOD FOR PRODUCING AQUEOUS POLYMER DISPERSIONS

PROCEDE DE FABRICATION DE DISPERSIONS DE POLYMERISATS AQUEUSES

(84) Benannte Vertragsstaaten:
**AT BE BG CH CY CZ DE DK EE ES FI FR GB GR HU IE IT LI LU MC NL PL PT RO SE SI SK TR**

(30) Priorität: **04.08.2003 DE 10335958**

(43) Veröffentlichungstag der Anmeldung:
**10.05.2006 Patentblatt 2006/19**

(73) Patentinhaber: **BASF Aktiengesellschaft**
**67056 Ludwigshafen (DE)**

(72) Erfinder:
- **GAO, Jun**
**68161 Mannheim (DE)**
- **KONG, Xiang-Ming**
**55128 Mainz (DE)**
- **HUNGENBERG, Klaus-Dieter**
**69488 Birkenau (DE)**
- **SCHMIDT-THÜMMES, Jürgen**
**67141 Neuhofen (DE)**

(56) Entgegenhaltungen:
**WO-A-02/00742**
**WO-A-03/040192**
**US-A- 3 951 925**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 654 291 B1

Printed by Jouve, 75001 PARIS (FR)

## Beschreibung

Gegenstand der vorliegenden Erfindung ist ein Verfahren zur Herstellung einer wässrigen Polymerisatdispersion durch radikalisch initiierte wässrige Emulsionspolymerisation von wenigstens einer ethylenisch ungesättigten Verbindung (Monomer) in Anwesenheit wenigstens eines Dispergiermittels, welches dadurch gekennzeichnet ist, dass man

a) in einem Reaktionsgefäß bei einer Temperatur, welche kleiner oder gleich der Startreaktionstemperatur $T_s$ ist,
$a_1$) wenigstens eine Teilmenge an entionisiertem Wasser,
$a_2$) wenigstens eine Teilmenge wenigstens eines öllöslichen Radikalinitiators,
$a_3$) wenigstens eine Teilmenge wenigstens eines Dispergiermittels,
$a_4$) gegebenenfalls eine Teilmenge des wenigstens einen Monomeren und
$a_5$) gegebenenfalls eine Teilmenge wenigstens eines wasserlöslichen Radikalinitiators vorlegt, daran anschließend
b) das erhaltene Reaktionsgemisch gegebenenfalls auf die Startreaktionstemperatur $T_s$ aufheizt, daran anschließend
c) dem Reaktionsgemisch
$c_1$) die gegebenenfalls verbliebene Restmenge an entionisiertem Wasser,
$c_2$) die gegebenenfalls verbliebene Restmenge des wenigstens einen öllöslichen Radikalinitiators,
$c_3$) die gegebenenfalls verbliebene Restmenge des wenigstens einen Dispergiermittels,
$c_4$) die Gesamtmenge bzw. die gegebenenfalls verbliebene Restmenge des wenigstens einen Monomeren und
$c_5$) die Hauptmenge des wenigstens einen wasserlöslichen Radikalinitiators zudosiert und dabei
d) während der Zudosierung des wenigstens einen Monomeren das Reaktionsgemisch auf eine Endreaktionstemperatur $T_E$ aufheizt.

Wässrige Polymerisatdispersionen (Latices) sind allgemein bekannt. Es handelt sich um fluide Systeme, die als disperse Phase in wässrigem Dispergiermedium aus mehreren ineinander verschlungenen Polymerisatketten bestehende Polymerisatknäuel (sogenannte Polymerisatteilchen) in disperser Verteilung enthalten. Der gewichtsmittlere Durchmesser der Polymerisatteilchen liegt häufig im Bereich von 10 bis 5000 nm.

Ebenso wie Polymerisatlösungen beim Verdampfen des Lösungsmittels, weisen wässrige Polymerisatdispersionen beim Verdampfen des wässrigen Dispergiermediums das Potential zur Ausbildung von Polymerisatfilmen auf, weshalb sie insbesondere als Bindemittel Anwendung finden. Aufgrund ihrer umweltfreundlichen Eigenschaften gewinnen sie zunehmend an Bedeutung.

Die Herstellung wässriger Polymerisatdispersionen erfolgt häufig durch radikalisch initiierte wässrige Emulsionspolymerisation [vgl. z.B. Encyclopedia of Polymer Science and Engineering, Vol. 8, Seite 659 ff. (1987); D.C. Blackley, in High Polymer Latices, Vol. 1, Seite 35 ff. (1966); H. Warson, The Applications of Synthetic Resin Emulsions, Seite 246 ff., Kapitel 5 (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin 1969]. Kennzeichnend für dieses Verfahren ist, dass als Polymerisationskatalysatoren sogenannte wasserlösliche Radikalinitiatoren eingesetzt werden.

Die radikalisch initiierte wässrige Emulsionspolymerisation erfolgt aus apparativen Gründen häufig bei Temperaturen unter 100 °C. Da die Polymerisationsgeschwindigkeiten [entsprechend der momentanen Monomerenumsatzrate] mit abnehmender Monomerenkonzentration stark absinken, andererseits die Belegzeiten der aus Gründen der Reaktionssicherheit mess- und regeltechnisch aufwendig ausgerüsteten Polymerisationsreaktoren minimert werden sollen, erfolgt die Polymerisationsreaktion im Polymerisationskessel häufig nur bis zu einem Monomerenumsatz ≥ 95 Gew.-%. Der Umsatz der restlichen Monomeren erfolgt dann in einem nachgeschalteten Polymerisationsschritt in einem separaten, in der Regel mess- und regeltechnisch weniger aufwendig ausgerüsteten Reaktor. In der Regel erfolgt diese "Nachpolymerisation" mit einem für diese Zwecke optimierten Radikalinitiator bzw. Radikalinitiatorensystem. Beispiele für Radikalinitiatoren, welche für die Nachpolymerisation bzw. Absenkung der Restmonomerengehalte insbesondere geeignet sind, finden sich in den Schriften EP-B 003 957, EP-B 028 348, EP-B 563 726, EP-A 764 699, US-A 4 529 753, DE-A 37 18 520, DE-A 38 34 734, DE-A 42 32 194, DE-A 195 29 599, WO 95/33775, EP-A 767 180, DE-A 19839199 oder DE-A19840586.

Daneben offenbart die WO 00/22003 ein einstufiges Verfahren zur Herstellung von restmonomerenarmen wässrigen Polymerisatdispersionen, bei welchem die Polymerisationsreaktion durch ein Redox-Initiatorensystem initiiert und die Polymerisationstemperatur nach einem definierten Temperaturprofil vorgegeben wird. Nachteilig an diesem Verfahren ist, dass neben dem als Radikalinitiator wirkenden Oxidationsmittel zwingend ein Reduktionsmittel vorhanden ist, durch welches zwar die Polymerisationstemperatur herabgesetzt werden kann, durch welches aber auch zusätzliche Fremdkomponenten in die wässrige Polymerisatdispersionen gelangen, welche sich in der Regel auch durch nachfolgende Inertgas- oder Wasserdampfstrippung nicht aus der wässrigen Polymerisatdispersion entfernen lassen.

Vor dem Hintergrund des Standes der Technik bestand die Aufgabe der vorliegenden Erfindung darin, ein

weiteres einstufiges Verfahren zur Herstellung restmonomerenarmer wässriger Polymerisatdispersionen zur Verfügung zu stellen, welches jedoch ohne zusätzliche Reduktionsmittel auskommt.

Dementsprechend wurde das eingangs definierte Verfahren gefunden.

Zur Herstellung der wässrigen Polymerisatdispersionen kommt als wenigstens ein Monomer insbesondere in einfacher Weise radikalisch polymerisierbare ethylenisch ungesättigte Verbindungen in Betracht, wie beispielsweise Ethylen, vinylaromatische Monomere, wie Styrol, α-Methylstyrol, o-Chlorstyrol oder Vinyltoluole, Vinylhalogenide, wie Vinylchlorid oder Vinylidenchlorid, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -isobutyl-, pentyl-, -hexyl-, -heptyl-, -octyl-, -nonyl-, -decyl- und -2-ethylhexylester, Fumar- und Maleinsäuredimethylester oder-di-n-butylester, Nitrile α,β-monoethylenisch ungesättigter Carbonsäuren, wie Acrylnitril, Methacrylnitril, Fumarsäuredinitril, Maleinsäuredinitril sowie $C_{4-8}$-konjugierte Diene, wie 1,3-Butadien (Butadien) und Isopren. Die genannten Monomere bilden in der Regel die Hauptmonomeren, die, bezogen auf die Gesamtmonomerenmenge, einen Anteil von mehr als 50 Gew.-%, bevorzugt mehr als 80 Gew.-% auf sich vereinen. In aller Regel weisen diese Monomeren in Wasser bei Normalbedingungen [20°C, 1 bar (absolut)] lediglich eine mäßige bis geringe Löslichkeit auf.

Monomere, die unter den vorgenannten Bedingungen eine erhöhte Wasserlöslichkeit aufweisen, sind solche, die entweder wenigstens eine Säuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien 3 bis 6 C-Atome aufweisende α,β-monoethylenisch ungesättigte Mono- und Dicarbonsäuren und deren Amide, wie z.B. Acrylsäure, Methacrylsäure, Maleinsäure, Fumarsäure, Itaconsäure, Acrylamid und Methacrylamid, ferner Vinylsulfonsäure, 2-Acrylamido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-(N,N-Dimethylamino) ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat. Im Normalfall sind die vorgenannten Monomeren lediglich als modifizierende Monomere in Mengen von weniger als 10 Gew.-%, bevorzugt weniger als 5 Gew.-%, bezogen auf die Gesamtmonomerenmenge, enthalten.

Monomere, die üblicherweise die innere Festigkeit der Verfilmungen der Polymermatrix erhöhen, weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und - dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-$C_1$-$C_8$-Hydroxyalkylester wie n-Hydroxyethyl-, n-Hydroxypropyl- oder n-Hydroxybutylacrylat und -methacrylat sowie Verbindungen, wie Diacetonacrylamid und Acetylacetoxyethylacrylat bzw. -methacrylat. Häufig werden die vorgenannten Monomeren in Mengen von bis zu 10 Gew.-%, bevorzugt jedoch in Mengen von weniger als 5 Gew.-%, jeweils bezogen auf die Gesamtmonomerenmenge, eingesetzt.

Erfindungsgemäß besonders günstig herstellbare wässrige Polymerisatdispersionen sind solche, deren Polymerisate zu

- 50 bis 99,9 Gew.-% Ester der Acryl- und/oder Methacrylsäure mit 1 bis 12 C-Atome aufweisenden Alkanolen und/oder Styrol, oder
- 50 bis 99,9 Gew.-% Styrol und/oder Butadien, oder
- 50 bis 99,9 Gew.-% Vinylchlorid und/oder Vinylidenchlorid, oder
- 40 bis 99,9 Gew.-% Vinylacetat, Vinylpropionat und/oder Ethylen

in einpolymerisierter Form enthalten.

Insbesondere sind erfindungsgemäß solche wässrigen Polymerisatdispersionen herstellbar, deren Polymerisate zu

- 0,1 bis 5 Gew.-% wenigstens eine 3 bis 6 C-Atome aufweisende α,β-monoethylenisch ungesättigte Mono- und/oder Dicarbonsäure und/oder deren Amid und
- 50 bis 99,9 Gew.-% wenigstens ein Ester der Acryl- und/oder Methacrylsäure mit 1 bis 12 C-Atome aufweisenden Alkanolen und/oder Styrol, oder
- 0,1 bis 5 Gew.-% wenigstens eine 3 bis 6 C-Atome aufweisende α,β-monoethylenisch ungesättigte Mono- und/oder Dicarbonsäure und/oder deren Amid und
- 50 bis 99,9 Gew.-% Styrol und/oder Butadien, oder
- 0,1 bis 5 Gew.-% wenigstens eine 3 bis 6 C-Atome aufweisende α,β-monoethylenisch ungesättigte Mono- und/oder Dicarbonsäure und/oder deren Amid und
- 50 bis 99,9 Gew.-% Vinylchlorid und/oder Vinylidenchlorid, oder
- 0,1 bis 5 Gew.-% wenigstens eine 3 bis 6 C-Atome aufweisende α,β-monoethylenisch ungesättigte Mono- und/oder Dicarbonsäure und/oder deren Amid und
- 40 bis 99,9 Gew.-% Vinylacetat, Vinylpropionat und/oder Ethylen

in einpolymerisierter Form enthalten.

Im Rahmen des erfindungsgemäßen Verfahrens werden Dispergierhilfsmittel mitverwendet, die sowohl die Monomerentröpfchen als auch Polymerisatteilchen in der wässrigen Phase dispers verteilt halten und so die Stabilität der erzeugten wässrigen Polymerisatdispersion gewährleisten. Als solche kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Seiten 411 bis 420, Georg-Thieme-Verlag, Stuttgart, 1961.

Selbstverständlich können auch Gemische aus Emulgatoren und/oder Schutzkolloiden verwendet werden. Häufig werden als Dispergierhilfsmittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind.

Gebräuchliche Emulgatoren sind z.B. ethoxilierte Mono-, Di- und Tri-Alkylphenole (EO-Grad: 3 bis 50, Alkylrest: $C_4$ bis $C_{12}$), ethoxilierte Fettalkohole (EO-Grad: 3 bis 50; Alkylrest: $C_8$ bis $C_{36}$) sowie Alkalimetall- und Ammoniumsalze von Alkylsulfaten (Alkylrest: $C_8$ bis $C_{12}$), von Schwefelsäurehalbestern ethoxylierter Alkanole (EO-Grad: 4 bis 30, Alkylrest: $C_{12}$ bis $C_{18}$) und ethoxilierter Alkylphenole (EO-Grad: 3 bis 50, Alkylrest: $C_4$ bis $C_{12}$), von Alkylsulfonsäuren (Alkylrest: $C_{12}$ bis $C_{18}$) und von Alkylarylsulfonsäuren (Alkylrest: $C_9$ bis $C_{18}$). Weitere geeignete Emulgatoren finden sich in Houben-Weyl, Methoden der organischen Chemie, Band XIV/1, Makromolekulare Stoffe, Seiten 192 bis 208, Georg-Thieme-Verlag, Stuttgart, 1961.

Als grenzflächenaktive Substanzen haben sich ferner Verbindungen der allgemeinen Formel 1

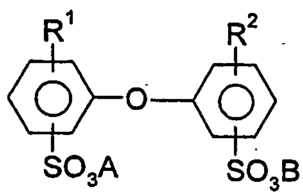 (I),

worin $R^1$ und $R^2$ $C_4$- bis $C_{24}$-Alkyl bedeuten und einer der Reste $R^1$ oder $R^2$ auch für Wasserstoff stehen kann, und A und B Alkalimetallionen und/oder Ammoniumionen sein können, erwiesen. In der allgemeinen Formel I bedeuten $R^1$ und $R^2$ bevorzugt lineare oder verzweigte Alkylreste mit 6 bis 18 C-Atomen, insbesondere mit 6, 12 und 16 C-Atomen oder H-Atome, wobei $R^1$ und $R^2$ nicht beide gleichzeitig H-Atome sind. A und B sind bevorzugt Natrium-, Kalium -oder Ammoniumionen, wobei Natriumionen besonders bevorzugt sind. Besonders vorteilhaft sind Verbindungen I, in denen A und B Natriumionen, $R^1$ ein verzweigter Alkylrest mit 12 C-Atomen und $R^2$ ein H-Atom oder $R^1$ sind. Häufig werden

technische Gemische verwendet, die einen Anteil von 50 bis 90 Gew.-% des monoalkylierten Produktes aufweisen, beispielsweise Dowfax® 2A1 (Marke der Dow Chemical Company). Die Verbindungen 1 sind allgemein bekannt, z.B. aus US-A 4 269 749, und im Handel erhältlich.

Bevorzugt werden für das erfindungsgemäße Verfahren nichtionische und/oder anionische Emulgatoren verwendet. Es können jedoch auch kationische Emulgatoren eingesetzt werden.

In der Regel beträgt die Menge an eingesetztem Dispergierhilfsmittel 0,1 bis 5 Gew.-%, bevorzugt 1 bis 3 Gew.-%, jeweils bezogen auf die Gesamtmenge der radikalisch zu polymerisierenden Monomeren (Gesamtmonomerenmenge).

Kennzeichnend für das erfindungsgemäße Verfahren ist, dass sowohl sogenannte wasserlösliche wie auch sogenannte öllösliche Radikalinitiatoren eingesetzt werden. Dabei werden als wasserlösliche Radikalinitiatoren in der Regel alle diejenigen Radikalinitiatoren verstanden, welche üblicherweise bei der radikalkalisch wässrigen Emulsionspolymerisation eingesetzt werden, während als öllösliche Radikalinitiatoren alle diejenigen Radikalinitiatoren verstanden werden, welche der Fachmann üblicherweise bei der radikalkalisch initiierten Lösungspolymerisation einsetzt. Im Rahmen dieser Schrift sollen als wasserlösliche Radikalinitiatoren alle diejenigen Radikalinitiatoren verstanden werden, die bei 20 °C und Atmosphärendruck in entionisiertem Wasser eine Löslichkeit ≥ 1 Gew.% aufweisen, während unter öllöslichen Radikalinitiatoren alle diejenigen Radikalinitiatoren verstanden werden, die unter vorgenannten Bedingungen eine Löslichkeit < 1 Gew.-% aufweisen. Häufig weisen wasserlösliche Radikal-initiatoren unter vorgenannten Bedingungen eine Wasserlöslichkeit ≥ 2 Gew.-%, ≥ 5 Gew.-%, oder ≥ 10 Gew.-% auf, während öllösliche Radikalinitiatoren häufig eine Wasserlösichkeit ≤ 0,9 Gew.%, ≤ 0,8 Gew.-%, ≤ 0,7 Gew.-%, ≤ 0,6 Gew.-%, ≤ 0,5 Gew.-%, ≤ 0,4 Gew.%, ≤ 0,3 Gew.-%, ≤ 0,2 Gew.-% oder ≤ 0,1 Gew.-% aufweisen.

Bei den wasserlöslichen Radikalinitiatoren kann sich dabei beispielsweise sowohl um Peroxide als auch um Azoverbindungen handeln. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Hydroperoxide, wie Alkylhydroperoxide, beispielsweise tert.-Butyl-, p-Mentyl- oder Cumylhydroperoxid eingesetzt werden. Als Azoverbindung finden im wesentlichen 2,2'-Azobis(isobutyronitril) und 2,2'-Azobis(amidinopropyl)dihydrochlorid (AIBA, entspricht V-50 von Wako Chemicals) Verwendung.

Bevorzugt werden als wasserlösliche Radikalinitiatoren ein Mono- oder Di-Alkalimetall- oder Ammoniumsalz der Peroxodischwefelsäure, beispielsweise Dikaliumperoxidisulfat, Dinatriumperoxidisulfat oder Diammoniumperoxidisulfat eingesetzt. Selbstverständlich ist es auch möglich, Gemische vorgenannter wasserlöslicher Radikalinitiatoren einzusetzten.

Die Gesamtmenge an eingesetztem wasserlöslichem Radikalinitiator beträgt 0,01 bis 5 Gew.-%, häufig 0,5 bis 3 Gew.-% und oft 1 bis 2 Gew.-%, jeweils bezogen auf die Gesamtmonomerenmenge.

Verfahrenswesentlich ist, dass der wenigstens eine wasserlösliche Radikalinitiator so ausgewählt wird, dass er bei der Startreaktionstemperatur $T_s$ eine radikalische Polymerisationsreaktion des wenigstens einen Monomeren zu initiieren vermag.

Als öllösliche Radikalinitiatoren seien beispielhaft genannt Dialkyl- bzw. Diarylperoxide, wie Di-tert.-amylperoxid, Dicumylperoxid, Bis(tert.-butylperoxiisopropyl)benzol, 2,5-Bis(tert.-butylperoxi)-2,5-dimethylhexan, tert.-Butylcumolperoxid, 2,5-Bis(tert.-butylperoxi)-2,5-dimethyl-3-hexen, 1,1-Bis(tert.-butylperoxi)-3,3,5-trimethylcyclohexan, 1,1-Bis (tert.-butylperoxi)cyclohexan, 2,2-Bis(tert.-butylperoxi)butan oder Di-tert.-butylperoxid, aliphatische und aromatische Peroxiester, wie Cumylperoxineodecanoat, 2,4,4-Trimethylpentyl-2-peroxineodecanoat, tert.-Amylperoxineodecanoat, tert.-Butylperoxineodecanoat, tert.-Amylperoxipivalat, tert.-Butylperoxipivalat, tert.-Amylperoxi-2-ethylhexanoat, tert.-Butylperoxi-2-ethylhexanoat, tert.-Butylperoxidiethylacetat, 1,4-Bis(tert.-butylperoxi)cyclohexan, tert.-Butylperoxiisobutanoat, tert.-Butylperoxi-3,5,5-trimethylhexanoat, tert.-Butylperoxiacetat, tert.-Amylperoxibenzoat oder tert.-Butylperoxibenzoat, Dialkanoyl- bzw. Dibenzoylperoxide, wie Düsobutanoylperoxid, Bis(3,5,5-trimethylhexanoyl)peroxid, Dilauroylperoxid, Didecanoylperoxid, 2,5-Bis(2-ethylhexanoylperoxi)-2,5-dimethylhexan oder Dibenzoylperoxid, sowie Peroxicarbonate, wie Bis(4-tert.-butylcyclohexyl)peroxidicarbonat, Bis(2-ethylhexyl)peroxidicarbonat, Di-tert.-butylperoxidicarbonat, Dicetylperoxidicarbonat, Dimyristylperoxidicarbonat, tert. -Butylperoxiisopropylcarbonat oder tert.-Butylperoxi-2-ethylhexylcarbonat.

Bevorzugt wird als wenigstens ein öllöslicher Radikalinitiator eine Verbindung ausgewählt aus der Gruppe umfassend tert.-Butylperoxi-2-ethylhexanoat (Trigonox® 21), tert.-Amylperoxi-2-ethylhexanoat, tert.-Butylperoxibenzoat (Trigonox® C), tert.-Amylperoxibenzoat, tert.-Butylperoxiacetat, tert.-Butylperoxi-3,5,5-trimethylhexanoat (Trigonox® 42 S), tert.-Butylperoxiisobutanoat, tert.-Butylperoxidiethylacetat, tert.-Butylperoxipivalat, tert.- Butylperoxiisopropylcarbonat, (Trigonox® BPIC) und tert.-Butylperoxi-2-ethylhexylcarbonat (Trigonox® 117) eingesetzt. Selbstverständlich ist es auch möglich, Gemische vorgenannter öllöslicher Radikalinitiatoren einzusetzen.

Die Gesamtmenge an eingesetztem öllöslichem Radikalinitiator beträgt 0,01 bis 5 Gew.-%, häufig 0,5 bis 3 Gew.% und oft 1 bis 2 Gew.-%, jeweils bezogen auf die Gesamtmonomerenmenge.

Der öllösliche Radikalinitiator wird dabei vorteilhafterweise so ausgewählt, dass er bei der Startreaktionstemperatur $T_S$ eine Halbwertszeit ≥ 10 Stunden, häufig ≥ 12 Stunden und oft ≥ 15 Stunden und bei der Endreaktionstemperatur $T_E$ eine Halbwertszeit ≤ 5 Stunden, häufig ≤ 3 Stunden und oft ≤ 1 Stunde aufweist. Die entsprechenden Halbwertszeiten sind dem Fachmann geläufig oder können von ihm in einfachen Versuchen ermittelt werden. Auch stehen entsprechende Nachschlagwerke zur Verfügung, beispielsweise J. Brandrup, E.H. Immergut und E.A. Grulke, Polymer Handbook, 4th edition, Chapter II, Seiten 1 bis 76, J. Wiley & Sons, New York.

Verfahrenswesentlich ist, dass in einem Reaktionsgefäß bei einer Temperatur, welche kleiner oder gleich der Startreaktionstemperatur $T_s$ ist, häufig bei 20 bis 25 °C (Raumtemperatur), wenigstens eine Teilmenge an entionisiertem Wasser, wenigstens eine Teilmenge wenigstens eines öllöslichen Radikalinitiators, wenigstens eine Teilmenge wenigstens eines Dispergiermittels, gegebenenfalls eine Teilmenge des wenigstens einen Monomeren und gegebenenfalls eine Teilmenge wenigstens eines wasserlöslichen Radikalinitiators vorlegt werden.

Vom entionisierten Wasser wird wenigstens eine Teilmenge im Reaktionsgefäß vorgelegt. Es kann jedoch auch die Gesamtmenge des Wassers im Reaktionsgefäß vorgelegt werden. Wird lediglich eine Teilmenge des Wassers vorgelegt, so kann die Restmenge des Wasser dem Reaktionsmedium während der Dosierphase separat oder vorteilhaft gemeinsam mit dem wenigstens einen Monomeren, insbesondere in Form einer wässrigen Monomerenemulsion zugeführt werden. Häufig beträgt die im Reaktionsgefäß vorgelegte Wassermenge ≤ 50 Gew.-%, ≤ 30 Gew.-%, ≤ 20 Gew.-% oder ≤ 10 Gew.-%, jeweils bezogen auf die Gesamtwassermenge. Die Gesamtwassermenge wird dabei so bemessen, dass die erhaltene wässrige Polymerisatdispersion einen Feststoffgehalt von 20 bis 70 Gew.-%, häufig 30 bis 65 Gew.-% und oft 40 bis 60 Gew.% aufweist.

Auch vom wenigstens einen Dispergiermittel wird wenigstens eine Teilmenge im Reaktionsgefäß vorgelegt. Es kann jedoch auch die Gesamtmenge des Dispergiermittels im Reaktionsgefäß vorgelegt werden. Wird lediglich eine Teilmenge des Dispergiermittels vorgelegt, so kann die Restmenge des Dispergiermittels dem Reaktionsmedium während der Dosierphase separat oder vorteilhaft gemeinsam mit dem wenigstens einen Monomeren, insbesondere in Form einer wässrigen Monomerenemulsion zugeführt werden. Häufig beträgt die im Reaktionsgefäß vorgelegte Dispergiermittelmenge ≤ 50 Gew.%, ≤ 30 Gew.-%, ≤ 20 Gew.-% oder ≤ 10 Gew.%, jeweils bezogen auf die Gesamtdispergiermittelmenge.

Daneben wird auch vom wenigstens einen öllöslichen Radikalinitiator wenigstens eine Teilmenge im Reaktionsgefäß vorgelegt. Es kann jedoch auch die Gesamtmenge des öllöslichen Radikalinitiators im Reaktionsgefäß vorgelegt werden. Wird lediglich eine Teilmenge des öllöslichen Radikalinitiators vorgelegt, so kann die Restmenge des öllöslichen Radikalinitiators dem Reaktionsmedium während der Dosierphase separat zugeführt werden. Häufig beträgt die im Reaktionsgefäß vorgelegte Menge des öllöslichen Radikalinitiators ≥ 50 Gew.%, ≥ 70 Gew.-%, ≥ 80 Gew.-% oder ≥ 90 Gew.-%, jeweils bezogen auf die Gesamtmenge des öllöslichen Radikalinitiators. Bevorzugt wird die Gesamtmenge des wenigstens einen öllöslichen Radikalinitiators im Reaktionsgefäß vorgelegt.

Optional kann auch eine Teilmenge des wenigstens einen Monomeren vorgelegt werden. Ist dies der Fall, so beträgt die im Reaktionsgefäß vorgelegte Menge des wenigstens einen Monomeren ≤ 50 Gew.-%, ≤ 30 Gew.-%, ≤ 20 Gew.%, ≤ 10 Gew.% oder ≤ 5 Gew.-%, jeweils bezogen auf die Gesamtmonomerenmenge. Optional bevorzugt sind ≤ 10 Gew.% oder ≤ 5 Gew.-% an Monomeren, jeweils bezogen auf die Gesamtmonomerenmenge.

Optional kann darüber hinaus auch eine Teilmenge des wenigstens einen wasserlöslichen Radikalinitiators vorgelegt werden. Ist dies der Fall, so beträgt die im Reaktionsgefäß vorgelegte Menge des wenigstens einen wasserlöslichen Radikalinitiators ≤ 30 Gew.-%, ≤ 20 Gew.%, ≤ 10 Gew.-% oder ≤ 5 Gew.-%, jeweils bezogen auf die Gesamtmenge des wenigstens einen wasserlöslichen Radikalinitiators. Optional bevorzugt sind ≤10 Gew.-% oder ≤ 5 Gew.-% an wasserlöslichen Radikalinitiatoren, jeweils bezogen auf die Gesamtmenge an wasserlöslichen Radikalinitiatoren. Häufig wird im Reaktionsgefäß kein wasserlöslicher Radikalinitiator vorgelegt.

Wie bei allen radikalischen Polymerisationsreaktionen ist es vorteilhaft, wenn die Vorlage der Reaktionskomponenten, die Dosierung/Polymerisation sowie die Nachreaktion im Reaktionsgefäß unter Inertgasatmosphäre, beispielsweise unter Stickstoff- oder Argonatmosphäre, erfolgt.

Ist die Temperatur, bei welcher die Vorlage der Reaktionskomponenten in das Reaktionsgefäß erfolgt, kleiner als die Startreaktionstemperatur $T_S$, beispielsweise Raumtemperatur, so wird das Reaktionsgemisch unter Rühren und unter Inertgasatmosphäre auf die Startreaktionstemperatur $T_s$ aufgeheizt und gegebenenfalls bei dieser Temperatur einige Zeit belassen. Dies ist insbesondere dann von Vorteil, wenn in das Reaktionsgefäß Teilmengen an Monomeren sowie wasserlöslichem Radikalinitiator vorgelegt wurden. Die Zeitdauer wird häufig so gewählt, dass sie wenigstens ausreicht, um die Polymerisationsreaktion zu starten, was in der Regel im Freiwerden von Polymerisationswärme erkennbar ist. Entsprechendes gilt auch, wenn die Vorlage vorgenannter Komponenten bei der Startreaktionstemperatur $T_s$ erfolgt.

Anschließend wird dem im Reaktionsgefäß vorliegendem Reaktionsgemisch die gegebenenfalls verbliebene Restmenge an entionisiertem Wasser, die gegebenenfalls verbliebene Restmenge des wenigstens einen öllöslichen Radikalinitiators, die gegebenenfalls verbliebene Restmenge des wenigstens einen Dispergiermittels, die Gesamtmenge bzw. die gegebenenfalls verbliebene Restmenge des wenigstens einen Monomeren und die Hauptmenge des wenigstens eines wasserlöslichen Radikalinitiators zudosiert und dabei während der Zudosierung das Reaktionsgemisch auf eine

Endreaktionstemperatur $T_E$ aufheizt.

Nach Erreichen der Startreaktionstemperatur $T_s$ bzw. nachdem das im Reaktionsgefäß befindliche Reaktionsgemisch einige Zeit bei dieser Temperatur belassen wurde, wird dem Reaktionsgemisch die Gesamtmenge bzw. die gegebenenfalls verbliebene Restmenge des wenigstens einen Monomeren und die Hauptmenge des wenigstens eines wasserlöslichen Radikalinitiators zudosiert. Vorteilhaft beginnen beide Dosierungen zeitgleich und erfolgen dergestalt, dass die Polymerisationsreaktion des wenigstens einen Monomeren nicht abbricht.

Die Zudosierung des wenigstens einen Monomeren erfolgt in der Regel innerhalb einer Zeitspanne Z, welche abhängig von der Art und Menge der Monomeren bzw. der Kühlkapazität des Reaktionsgefäßes 10 Minuten bis 20 Stunden, häufig 0,5 bis 5 Stunden oder 0,75 Stunden bis 1,5 Stunden beträgt. Dabei kann die Gesamtmenge bzw. die verbleibende Restmenge des wenigstens einen Monomeren dem Reaktionsgefäß kontinuierlich, d.h. mit gleichbleibendem Mengenstrom, diskontinuierlich, d.h. mit wechselndem Mengenstrom, stufenförmig, d.h. mit unterbrochenem Mengenstrom oder nach einem beliebigen vorgegebenen Mengenstromprofil zudosiert werden. Selbstverständlich ist es auch möglich, während der Dosierung die Monomerzusammensetzung zu ändern und so zu Polymerisatteilchen zu gelangen, die zweiphasig, beispielsweise Kern/Schale-Teilchen, oder mehrphasig sind. Darüber hinaus ist es auch möglich, die Monomeren dem Reaktionsgefäß nach einer dem Fachmann geläufigen Gradientenfahrweise [d.h. kontinuierliche Änderung der Monomerenzusammensetzung] zuzudosieren.

Die Dosierung des wenigstens einen wasserlöslichen Radikalinitiators erfolgt dabei dergestalt, dass die Hauptmenge, d.h. ≥ 50 Gew.-%, ≥ 60 Gew.%, ≥ 70 Gew.-%, ≥ 80 Gew.-%, ≥ 90 Gew.%, jeweils bezogen auf die Gesamtmenge des wasserlöslichen Radikalinitiators oder sogar dessen Gesamtmenge, vorteilhaft zeitgleich mit der Monomerendosierung beginnend, während der Monomerendosierung zugegeben wird und so zur Aufrechterhaltung der Polymerisationsreaktion bzw. zur Abreaktion der Monomeren beiträgt. Teilmengen bis ≤ 30 Gew.-% des wasserlöslichen Radikalinitiators können vor der Monomerendosierung vorgelegt und Teilmengen bis ≤ 20 Gew.-% oder ≤ 10 Gew.% des wasserlöslichen Radikalinitiators nach dem Ende der Monomerendosierung dem Polymerisationsgemisch zugegeben werden. Dabei kann die Gesamtmenge, die Hauptmenge oder die verbleibende Restmenge des wenigstens einen wasserlöslichen Radikalinitiators dem Reaktionsgefäß prinzipiell kontinuierlich, diskontinuierlich, stufenförmig oder nach einem beliebigen vorgegebenen Mengenstromprofil zudosiert werden. Häufig erfolgt die Vorlage einer Teilmenge an wasserlöslichem Radikalinitiator vor der Monomerendosierung und die Zugabe der resultierenden Restmengen kontinuierlich parallel zur Monomerendosierung.

Vorteilhaft erfolgt die Zudosierung der Monomeren und des wasserlöslichen Radikalinititators dergestalt, dass spätestens ab dem Zeitpunkt, zu dem 35 Gew.-% der Gesamtmonomerenmenge dem Reaktionsgemisch zugeführt wurden, die Dosierung der Monomeren und des wasserlöslichen Radikalinitiators derart erfolgt, dass der Umsatz der dem Reaktionsgemisch bereits zudosierten Monomeren zu jedem Zeitpunkt ≥ 80 Gew.-% oder sogar ≥ 90 Gew.-% beträgt, was sich beispielsweise anhand reaktionskalorimetrischer Messungen kontrollieren bzw. realisieren lässt.

Die gegebenenfalls verbliebenen Restmengen an entionisiertem Wasser, des wenigstens einen öllöslichen Radikalinitiators oder des wenigstens einen Dispergiermittels können dem Reaktionsgefäß prinzipiell kontinuierlich, diskontinuierlich, stufenförmig oder nach einem beliebigen vorgegebenen Mengenstromprofil zudosiert werden. In der Regel erfolgt die Dosierung der gegebenenfalls verbliebenen Restmengen an entionisiertem Wasser, des wenigstens einen öllöslichen Radikalinitiators oder des wenigstens einen Dispergiermittels innerhalb der Zeitspanne ≤ Z. Wurde nicht die Gesamtmenge des wenigstens einen öllöslichen Radikalinitiators im Reaktionsgefäß vorgelegt, so erfolgt dessen Restmengendosierung vorteilhaft innerhalb der Zeitspanne, innerhalb derer dem Reaktionsgemisch ≤ 50 Gew.-%, ≤ 40 Gew.-%, ≤ 30 Gew.-%, ≤ 20 Gew.-% oder ≤ 10 Gew.-% der Gesamtmonomerenmenge zudosiert wurden.

Der Aufheizvorgang von $T_S$ nach $T_E$ kann prinzipiell vor, nach oder gleichzeitig mit dem Beginn der Monomerendosierung gestartet werden. Häufig wird der Aufheizvorgang gleichzeitig mit dem Beginn der Monomerendosierung gestartet. Vorteilhaft erfolgt der Aufheizvorgang innerhalb der Zeitspanne ≤ Z. Der Aufheizvorgang kann kontinuierlich, d.h. mit konstanter Aufheizrate, diskontinuierlich, d.h. mit wechselnder Aufheizrate, stufenförmig, d.h. mit unterbrochenen Aufheizraten [= Phasen konstanter Temperatur] oder nach einem beliebigen vorgegebenen Aufheizprofil erfolgen. Vorteilhaft ist es, wenn das Aufheizen des Reaktionsgemisches mittels der bei der Polymerisationsreaktion des wenigstens einen Monomeren freiwerdenden Polymerisationsenergie erfolgt. Übliche Aufheizraten sind ≥ 1 °C/Stunde, ≥ 5 °C/Stunde, ≥ 10 °C/Stunde, ≥ 20 °C/Stunde, ≥ 30 °C/Stunde oder ≥ 60 °C/Stunde aber auch ≤ 100 °C/Stunde, ≤ 70 °C/Stunde, ≤ 50 °C/Stunde, ≤ 40 °C/Stunde, ≤ 30 °C/Stunde oder ≤ 20 °C/Stunde und alle Werte dazwischen.

Besonders vorteilhaft erfolgt der Aufheizvorgang des Reaktionsgemisches dergestalt, dass die Temperatur $T_E$ frühestens zu einem Zeitpunkt erreicht wird, nachdem dem Reaktionsgemisch wenigstens die Hauptmenge der Monomeren, d.h. ≥ 50 Gew.%, ≥ 60 Gew.-%, ≥ 70 Gew.-%, ≥ 80 Gew.%, ≥ 90 Gew.-% oder sogar 100 Gew.-% der Gesamtmonomerenmenge zudosiert wurde.

Die Startreaktionstemperatur $T_s$ liegt häufig im Bereich von ≥ 30 bis ≤ 120 °C und oft im Bereich von ≥ 50 bis ≤ 110 °C sowie im Bereich von ≥ 70 bis ≤ 100°C, während die Endreaktionstemperatur $T_E$ häufig im Bereich von ≥ 80 bis ≤ 200 °C und oft im Bereich von ≥ 100 bis ≤ 170 °C sowie im Bereich von ≥ 110 bis ≤ 150 °C liegt. Von Vorteil ist, wenn die Endreaküonstemperatur $T_E \geq T_s + 10$ °C, $\geq T_s + 20$ °C oder $\geq T_s + 30$ °C ist.

Von Bedeutung ist, dass das erfindungsgemäße Verfahren optional auch in Anwesenheit wenigstens eines Reduktionsmittels durchgeführt werden kann, welches dem Reaktionsgemisch jedoch frühestens zugegeben wird, nachdem wenigstens 50 Gew.-% oder wenigstens 60 Gew.-% bzw. wenigstens 70 Gew.-% der Monomerengesamtmenge dem Reaktionsgemisch zudosiert wurden. Die Gesamtmenge an optional zudosiertem Reduktionsmittel beträgt 0,01 bis 5 Gew.-%, häufig 0,5 bis 3 Gew.% und oft 1 bis 2 Gew.-%, jeweils bezogen auf die Gesamtmonomerenmenge. Die Dosierung des optional zugesetzten Reduktionsmittels kann kontinuierlich, diskontinuierlich, stufenförmig oder nach einem beliebigen vorgegebenen Mengenstromprofil erfolgen. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/ oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden.

Die erfindungsgemäße radikalische wässrige Emulsionspolymerisation kann prinzipiell bei einem Druck kleiner, gleich oder größer 1 bar (absolut) durchgeführt werden. Günstig ist es, wenn die Druckbedingungen bei der Vorlage und bei der Dosierung/Polymerisation so gewählt werden, dass das Reaktionsgemisch zu keinem Zeitpunkt des erfindungsgemäßen Verfahrens zu sieden beginnt. Dabei kann der Druck 1,2, 1,5, 2, 5, 10, 15 bar oder noch höhere Werte einnehmen. Vorteilhaft wird die radikalische wässrige Emuslionspolymerisation bei einem Druck ≥ 1 bar (absolut) und unter Inertgasatmosphäre durchgeführt.

Darüber hinaus hat es sich zur Erzielung hoher Monomerenumsätze bzw. niedriger Restmonomerengehalte als günstig erwiesen, wenn das Reaktionsgemisch nach dem Ende der Monomerenzudosierung noch wenigstens 30 Minuten unter Rühren bei der Endreaktionstemperatur $T_E$ gehalten wird. Abhängig von der Reaktivität der zur Polymerisation eingesetzten Monomeren beträgt die Nachreaktionszeit häufig ≥ 30 Minuten und ≤ 5 Stunden oder ≥ 45 Minuten und ≤ 3 Stunden oder ≥ 1 Stunde und ≤ 2 Stunden.

Selbstverständlich kann das erfindungsgemäße Verfahren auch in Gegenwart weiterer üblicher Hilfsstoffe, wie beispielsweise radikalkettenübertragende Verbindungen, Polymersaat, Schaumdämpfer, Viskositätsregler, Biozide etc. durchgeführt werden. Abhängig von ihrer Funktion, können diese Hilfsstoffe der Vorlage (beispielsweise Polymersaat, Schaumdämpfer), während der Dosierung (beispielsweise radikalkettenübertragenden Verbindungen, Polymersaat) oder nach dem Polymerisationsende (beispielsweise Biozide) zugegeben werden.

Radikalkettenübertragende Verbindungen werden üblicherweise eingesetzt, um das Molekulargewicht der durch eine radikalisch wässrige Emulsionspolymerisation zugänglichen Polymerisate zu reduzieren bzw. zu kontrollieren. Dabei kommen im wesentlichen aliphatische und/oder araliphatische Halogenverbindungen, wie beispielsweise n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid, organische Thioverbindungen, wie primäre, sekundäre oder tertiäre aliphatische Thiole, wie beispielsweise E-thanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, sowie alle weiteren im Polymerhandbook 3rd edition, 1989, J. Brandrup und E.H. Immergut, John Wiley & Sons, Abschnitt II, Seiten 133 bis 141, beschriebenen Schwefelverbindungen, aber auch aliphatische und/ oder aromatische Aldehyde, wie Acetaldeyhd, Propionaldehyd und/oder Benzaldehyd, ungesättigte Fettsäuren, wie Ölsäure, Diene mit nicht konjugierten Doppelbindungen, wie Divinylmethan oder Vinylcyclohexan oder Kohlenwasserstoffe mit leicht abstrahierbaren Wasserstoffatomen, wie beispielsweise Toluol, zum Einsatz. Es ist aber auch möglich, Gemische sich nicht störender vorgenannter radikalkettenübertragender Verbindungen einzusetzen.

Die im erfindungsgemäßen Verfahren optional eingesetzte Gesamtmenge der radikalkettenübertragenden Verbindungen, bezogen auf die Gesamtmenge der zu polymerisierenden Monomeren, ist in der Regel ≤ 5 Gew.-%, oft ≤ 3 Gew.% und häufig ≤ 1 Gew.-%.

Neben der saatfreien Herstellungsweise kann zur Einstellung der Polymerteilchengröße die erfindungsgemäße Emulsionspolymerisation nach dem Polymersaat-Verfahren oder in Gegenwart einer in situ hergestellten wässrigen Polymersaat-Dispersion erfolgen. Verfahren hierzu sind bekannt und können dem Stand der Technik entnommen werden (siehe beispielsweise EP-B 40 419, EP-A 567 812, EP-A 614 922 sowie 'Encyclopedia of Polymer Science and Technology', Vol. 5, Seite 847, John Wiley & Sons Inc., New York, 1966). So empfiehlt der Stand der Technik, beim Zulaufverfahren eine definierte feinteilige Polymersaat-Dispersion im Polymerisationsgefäß vorzulegen und dann das

wenigstens eine Monomere in Gegenwart des Saatlatices zu polymerisieren. Hierbei wirken die Saat-Polymerisatteilchen als 'Polymerisationskeime' und entkoppeln die Polymersatteilchenbildung und das Polymerisatteilchenwachstum. Während der Emulsionspolymerisation kann dem Reaktionsgemisch weitere wässrige Polymersaat-Dispersion zugegeben werden. Hierdurch werden breite Größenverteilungen der Polymerisatteilchen erreicht, die insbesondere bei Polymerisatdispersionen mit hohem Feststoffgehalt oftmals erwünscht sind (vgl. hierzu beispielsweise DE-A 4213965). Anstelle der Zugabe eines definierten Saatlatices kann dieser auch in situ erzeugt werden. Hierzu wird beispielsweise eine Teilmenge des wenigstens einen Monomeren und des wasserlöslichen Radikalinitiators zusammen mit einer Teil- oder der Gesamtmenge des Dispergiermittels vorgelegt und auf Startreaktionstemperatur $T_S$ erwärmt, wobei eine relativ feinteilige Saat entsteht. Anschließend wird im gleichen Polymerisationsgefäß die eigentliche Polymerisation nach dem beschriebenen Dosierverfahren durchgeführt (siehe auch DE-A 4213965).

Von Bedeutung ist, dass das erfindungsgemäße Verfahren optional auch in Anwesenheit gelöster Schwermetallionen, welche in wechselnden Wertigkeiten vorliegen können, wie beispielsweise Eisen-, Mangan-, Kupfer-, Chrom- oder Vanadiumionen, durchgeführt werden kann. Häufig werden auch Komplexbildner, beispielsweise Ethylendiamintetraessigsäure (EDTA) oder Nitrilotriessigsäure (NTA) zugegeben, die die Schwermetallionen komplexieren und unter den Reaktionsbedingungen in Lösung halten. Üblicherweise weisen die erfindungsgemäß erhaltenen wässrigen Polymerisatdispersionen einen Gehalt an gelösten Schwermetallionen ≤ 1000 Parts per Million (ppm), oft ≤ 500 ppm und häufig ≤ 100 ppm auf.

Die nach dem erfindungsgemäßen Verfahren zugänglichen Polymerisate können Glasübergangstemperaturen von -70 bis +150 °C aufweisen. Abhängig vom Einsatzzweck werden häufig Polymerisate benötigt, deren Glasübergangstemperaturen innerhalb bestimmter Bereiche liegen. Durch geeignete Auswahl der zu polymerisierenden ethylenisch ungesättigten Monomeren ist es dem Fachmann möglich, gezielt Polymerisate herzustellen, deren Glasübergangstemperaturen im gewünschten Bereich liegen. Sollen beispielsweise die nach dem erfindungsgemäßen Verfahren erhältlichen Polymerisate als Haftkleber eingesetzt werden, wird die Zusammensetzung des zu polymerisierenden Monomerengemisches so gewählt, dass die erzeugten Polymerisate Glasübergangstemperaturen < 0 °C, häufig ≤ -5 °C und oft ≤ -10°C aufweisen. Sollen die Polymerisate dagegen beispielsweise als Bindemittel in Beschichtungsformulierungen Verwendung finden, wird die Zusammensetzung des zu polymerisierenden Monomerengemisches so gewählt, dass die erzeugten Polymerisate Glasübergangstemperaturen von -40 bis +150 °C, häufig von 0 bis +100 °C und oft von +20 bis +80 °C aufweisen. Entsprechendes gilt auch für die Polymerisate, die in anderen Anwendungsgebieten eingesetzt werden sollen.

Mit der Glasübergangstemperatur Tg, ist der Grenzwert der Glasübergangstemperatur gemeint, dem diese gemäß G. Kanig (Kolloid-Zeitschrift & Zeitschrift für Polymere, Bd. 190, Seite 1, Gleichung 1) mit zunehmendem Molekulargewicht zustrebt. Die Glasübergangstemperatur wird nach dem DSC-Verfahren ermittelt (Differential Scanning Calorimetry, 20 K/min, midpoint-Messung, DIN 53 765).

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/T_g = x^1/T_g^1 + x^2/T_g^2 + .... x^n/T_g^n,$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die Tg-Werte für die Homopolymerisate der meisten Monomeren sind bekannt und z.B. in Ullmann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J.Wiley, New York 1975, und 3rd Ed. J. Wiley, New York 1989.

Die Polymerisatteilchen der nach dem erfindungsgemäßen Verfahren zugänglichen Polymerisatdispersionen weisen zahlenmittlere Teilchendurchmesser auf, welche in der Regel zwischen 10 und 1000 nm, häufig zwischen 50 und 700 nm und oft zwischen 100 und 500 nm liegen [ermittelt beispielsweise über quasielastische Lichtstreuung (ISO-Norm 13 321)].

Verfahrenswesentlich ist, dass die nach dem erfindungsgemäßen Verfahren zugänglichen wässrigen Polymerisatdispersionen nach dem Ende der Monomerenzudosierung oder vorteilhaft nach dem Ende der Nachreaktionszeit zur Entfernung eventuell noch störender leichtflüchtiger Komponenten ohne weiteren Heizvorgang mit Inertgas und/oder Wasserdampf gestrippt werden können. Die entsprechenden Strippvorgänge sind dem Fachmann geläufig und finden sich beispielsweise in den Schriften DE-A 2550023, DE-C 2759097, DE-C 2855146 oder DE-C 2521780.

Die nach dem erfindungsgemäßen Verfahren zugänglichen wässrigen Polymerisatdispersionen lassen sich nach dem Abkühlen auf Raumtemperatur entweder direkt oder nach entsprechender Inertgas- und/oder Wasserdampfstrippung vorteilhaft, beispielsweise als Bindemittel in Klebstoffen, Dichtmassen, Kunststoffputzen und Anstrichmitteln sowie zu Modifizierung von mineralischen Bindemitteln einsetzen. Ferner sind aus den wässrigen Polymerisatdispersionen in einfacher Weise (beispielsweise Gefrier- oder Sprühtrocknung) die entsprechenden Polymerisatpulver zugänglich, welche sich ebenfalls als Bindemittel in Klebstoffen, Dichtmassen, Kunststoffputzen und Anstrichmitteln sowie zu Modifizierung von mineralischen Bindemitteln eignen.

Durch das erfindungsgemäße Verfahren - insbesondere nach einer Inertgas- und/oder Wasserdampfstrippung - sind wässrige Polymerisatdispersionen zugänglich, welche nahezu frei von Monomeren oder anderen flüchtigen Bestandteilen und somit geruchs- und emissionsarm sind. Die erfindungsgemäß zugänglichen wässrigen Polymerisatdispersionen eigenen sich daher vorteilhaft zur Herstellung emissionsarmer und lösungsmittelfreier Beschichtungsmassen, wie beispielsweise Kunststoffdispersionsputze, Beschichtungs- oder Anstrichmittel und insbesondere emissionsarme Dispersionsfarben sowie Dichtmassen und Klebstoffe. Das Verfahren zeichnet sich insbesondere dadurch aus, dass niedrige Restmonomerengehalte auch ohne zusätzlichen chemischen Nachbehandlungsschritt, welcher die wässrigen Polymerisatdispersionen in der Regel mit zusätzlichen Nebenkomponenten belastet, erhalten werden. Ein entsprechender Nachbehandlungsreaktor ist also nicht mehr erforderlich. Ferner ist von Bedeutung, dass sich durch die erfindungsgemäß optimierten Monomerenumsatzraten die Polymerisationszeiten reduzieren und dadurch die Polymerkapazitäten erhöhen lassen.

Die Erfindung wird anhand des folgenden Beispiels näher erläutert.

Beispiel

In einem 6 l-Polymerisationsreaktor mit MIG-Rührer, Heiz-/Kühleinrichtungen wurden bei 20 bis 25 °C (Raumtemperatur)

| | |
|---|---|
| 500 g | entionisiertes Wasser |

| | |
|---|---|
| 1,0 g | einer 5 gew.%igen wässrigen Lösung eines EDTA-Fe/Na-Salzes (Dissolvine® E-FE-6, Marke der Firma Akzo Nobel) |
| 4,0 g | einer 28 gew.%igen wässrigen Lösung des Schwefelsäurehalbester eines ethoxylierten $C_{12}$-Fettalkohols (Texapon® NSO IS, Marke der Firma Akzo Nobel) |
| 112 g | eines wässrigen Polymerlatex (hergestellt durch radikalisch initiierte Emulsionspolymerisation von Styrol; Polymerfeststoffgehalt 33 Gew.-%) mit einem gewichtsmittleren Teilchendurchmesser von 30 nm, |
| 185 g | einer 5 gew.%igen wässrigen Lösung von Itaconsäure |
| 14 g | tert.-Butylperoxibenzoat (Trigonox® C, Marke der Firma Akzo Nobel) |

sowie 5 Gew.-% des nachfolgend beschriebenen Zulaufs I vorgelegt und unter Rühren (90 U/min) und Stickstoffatmosphäre auf 95 °C erhitzt. Bei Erreichen von 95 °C wurden unter Rühren und gleichzeitig beginnend, die Restmenge des Zulaufs I sowie die Gesamtmengen der Zuläufe II und III innerhalb 90 Minuten mit gleichbleibenden Zulaufströmen zudosiert, wobei man die Reaktionstemperatur durch die freiwerdende Polymerisationswärme auf 120 °C ansteigen ließ, welche nach ca. 60 Minuten erreicht wurde. Während der Polymerisationsreaktion betrug der Druck in der Gasphase des Polymerisationsreaktors maximal 9 bar (Überdruck). Die Zuläufe I und II wurden dem Polymerisationsreaktor am Boden über eine gemeinsame Zuführleitung zugeführt.

Zulauf I ist eine wässrige Emulsion hergestellt aus:

| | |
|---|---|
| 600 g | entionisiertem Wasser |
| 50 g | einer 10 gew.-%igen wässrigen Lösung von Natriumhydroxid |
| 30 g | einer 28 gew.%igen wässrigen Lösung des Texapon® NSO IS |
| 80 g | Acrylsäure |
| 20 g | tert.-Dodecylmercaptan |
| 1000 g | Styrol |

Zulauf 11:

750 g Butadien

Zulauf III:

280 g einer 12 gew.-%igen wässrigen Lösung von Natriumperoxidisulfat.

Nach Beendigung der Zuläufe I bis III wurde das Polymerisationsgemisch noch zwei Stunden bei 120 °C unter Stickstoffatmosphäre gerührt. Anschließend wurde das Polymerisationsgemisch auf 60 °C abgekühlt und auf Atmosphärendruck entspannt. Zur Entfernung von nichtumgesetztem Butadien wurde der Polymerisationsreaktor auf 800 mbar (absolut) evakuiert und eine Stunde unter Rühren bei diesem Druck und bei 60 °C belassen. Anschließend kühlte man die erhaltene wässrige Polymerisatdispersion auf Raumtemperatur ab und ließ den Reaktorinnendruck auf Atmosphärendruck ansteigen.

Die erhaltene wässrige Polymerisatdispersion wies einen Polymerisatfeststoffgehalt von 52 Gew.-% auf. Der mittlere Polymerisatteilchendurchmesser betrug 125 nm. Die wässrige Polymerisatdispersion wies einen Restmonomerengehalt von 1570 ppm Styrol und 840 ppm Acrylsäure auf.

Die Feststoffgehalte wurden generell bestimmt, indem eine aliquote Menge der wässrigen Polymerisatdispersion bei 140 °C in einem Trockenschrank bis zur Gewichtskonstanz getrocknet wurde. Es wurden jeweils zwei separate Messungen durchgeführt. Der in den jeweiligen Beispielen angegebene Wert stellt den Mittelwert der beiden Messergebnisse dar.

Die resultierenden Styrol-Restmengen wurden generell gaschromatographisch, die Acrylsäure-Restmengen mittels HPLC bestimmt.

Der mittlere Teilchendurchmesser der Copolymerisatteilchen wurde generell durch dynamische Lichtstreuung an einer 0,005 bis 0,01 gewichtsprozentigen wässrigen Dispersion bei 23 °C mittels eines Autosizer IIC der Fa. Malvern Instruments, England, ermittelt. Angegeben wird der mittlere Durchmesser der Kumulantenauswertung (cumulant z-average) der gemessenen Autokorrelationsfunktion (ISO-Norm 13321).

Vergleichsbeispiel

In einem 6 1-Polymerisationsreaktor mit MIG-Rührer, Heiz-/Kühleinrichtungen wurden bei Raumtemperatur

| | |
|---|---|
| 500 g | entionisiertes Wasser |
| 1,0 g | einer 5 gew.-%igen wässrigen Lösung von Dissolvine® E-FE-6 |
| 4,0 g | einer 28 gew.-%igen wässrigen Lösung von Texapon® NSO IS |
| 112 g | eines wässrigen Polymerlatex (hergestellt durch radikalisch initiierte Emulsionspolymerisation von Styrol; Polymerfeststoffgehalt 33 Gew.-%) mit einem gewichtsmittleren Teilchendurchmesser von 30 nm, |
| 185 g | einer 5 gew.-%igen wässrigen Lösung von Itaconsäure |
| 42 g | tert.-Butylperoxibenzoat (Trigonox® C) |

sowie 5 Gew.-% des nachfolgend beschriebenen Zulaufs I vorgelegt und unter Rühren (90 U/min) und Stickstoffatmosphäre auf 95 °C erhitzt. Bei Erreichen von 95 °C wurden unter Rühren und gleichzeitig beginnend, die Restmenge des Zulaufs I sowie die Gesamtmengen der Zuläufe II und III innerhalb 90 Minuten mit gleichbleibenden Zulaufströmen zudosiert, wobei man die Reaktionstemperatur durch die freiwerdende Polymerisationswärme auf 120 °C ansteigen ließ, welche nach ca. 50 Minuten erreicht wurde. Während der Polymerisationsreaktion betrug der Druck in der Gasphase des Polymerisationsreaktors maximal 12 bar (Überdruck). Die Zuläufe 1 und II wurden dem Polymerisationsreaktor am Boden über eine gemeinsame Zuführleitung zugeführt.

Zulauf I ist eine wässrige Emulsion hergestellt aus:

| | |
|---|---|
| 600 g | entionisiertem Wasser |
| 50 g | einer 10 gew.-%igen wässrigen Lösung von Natriumhydroxid |
| 30 g | einer 28 gew.-%igen wässrigen Lösung des Texapon® NSO IS |
| 80 g | Acrylsäure |
| 20 g | tert.-Dodecylmercaptan |
| 1000 g | Styrol |

Zulauf 11:

| | |
|---|---|
| 750 g | Butadien |

Zulauf III:

| | |
|---|---|
| 220 g | einer 15 gew.-%igen wässrigen Lösung von Natriumformaldehydsulfoxylat. |

Nach Beendigung der Zuläufe 1 bis 111 wurde das Polymerisationsgemisch noch zwei Stunden bei 120 °C unter Stickstoffatmosphäre gerührt. Anschließend wurde das Polymerisationsgemisch auf 60 °C abgekühlt und auf Atmosphärendruck entspannt. Zur Entfernung von nichtumgesetztem Butadien wurde der Polymerisationsreaktor auf 800 mbar (absolut) evakuiert und eine Stunde unter Rühren bei diesem Druck und bei 60 °C belassen. Anschließend kühlte man die erhaltene wässrige Polymerisatdispersion auf Raumtemperatur ab und ließ den Reaktorinnendruck auf Atmosphärendruck ansteigen.

Die erhaltene wässrige Polymerisatdispersion wies einen Polymerisatfeststoffgehalt von 50 Gew.-% auf. Die mittlere Polymerisatteilchengröße betrug 130 nm. Die wässrige Polymerisatdispersion wies einen Restmonomerengehalt von 3550 ppm Styrol und 1910 ppm Acrylsäure auf.

## Patentansprüche

**1.** Verfahren zur Herstellung einer wässrigen Polymerisatdispersion durch radikalisch initiierte wässrige Emulsionspolymerisation von wenigstens einer ethylenisch ungesättigten Verbindung (Monomer) in Anwesenheit wenigstens eines Dispergiermittels, **dadurch gekennzeichnet, dass** man

a) in einem Reaktionsgefäß bei einer Temperatur, welche kleiner oder gleich der Startreaktionstemperatur $T_s$ ist,
$a_1$) wenigstens eine Teilmenge an entionisiertem Wasser,
$a_2$) wenigstens eine Teilmenge wenigstens eines öllöslichen Radikalinitiators,
$a_3$) wenigstens eine Teilmenge wenigstens eines Dispergiermittels,
$a_4$) gegebenenfalls eine Teilmenge des wenigstens einen Monomeren und
$a_5$) gegebenenfalls eine Teilmenge wenigstens eines wasserlöslichen Radikalinitiators vorlegt, daran anschließend
b) das erhaltene Reaktionsgemisch gegebenenfalls auf die Startreaktionstemperatur $T_s$ aufheizt, daran anschließend
c) dem Reaktionsgemisch
$c_1$) die gegebenenfalls verbliebene Restmenge an entionisiertem Wasser,
$c_2$) die gegebenenfalls verbliebene Restmenge des wenigstens einen öllöslichen Radikalinitiators,
$c_3$) die gegebenenfalls verbliebene Restmenge des wenigstens einen Dispergiermittels,
$c_4$) die Gesamtmenge bzw. die gegebenenfalls verbliebene Restmenge des wenigstens einen Monomeren und
$c_5$) die Hauptmenge des wenigstens einen wasserlöslichen Radikalinitiators zudosiert und dabei
d) während der Zudosierung des wenigstens einen Monomeren das Reaktionsgemisch auf eine Endreaktionstemperatur $T_E$ aufheizt, wobei unter wasserlöslichen Radikalinitiatoren solche verstanden werden, welche bei 20°C und Atmosphärendruck in entionisiertem Wasser eine Löslichkeit≥ 1 Gew. -% aufweisen, während unter öllöslichen Radikal-initiatoren solche verstanden werden, welche unter dem vorgenannten Bedingungen eine

Löslichkeit < 1 Gew. - % aufweisen und die Gesamtwassermenge so bemessen wird, dass die erhaltene wässrige Polymerisatdispersion einen Feststoffgehalt von 20 bis 70 Gew. - % aufweist.

**2.** Verfahren nach Anspruch 1, **dadurch gekennzeichnet, dass** der wenigstens eine wasserlösliche Radikalinitiator bei der Startreaktionstemperatur $T_s$ eine radikalische Polymerisationsreaktion des wenigstens einen Monomeren initiiert.

**3.** Verfahren nach einem der Ansprüche 1 oder 2, **dadurch gekennzeichnet, dass** der öllösliche Radikalinitiator bei der Startreaktionstemperatur $T_S$ eine Halbwertszeit ≥ 10 Stunden und bei der Endreaktionstemperatur $T_E$ eine Halbwertszeit ≤ 5 Stunden aufweist.

**4.** Verfahren nach einem der Ansprüche 1 bis 3, **dadurch gekennzeichnet, dass** $T_E \geq T_S + 10°C$ ist.

**5.** Verfahren nach einem der Ansprüche 1 bis 4, **dadurch gekennzeichnet, dass** $T_S$ ≥ 30 bis ≤ 120°C und $T_E$ ≥ 80 bis ≤ 200 °C beträgt.

**6.** Verfahren nach einem der Ansprüche 1 bis 5, **dadurch gekennzeichnet, dass** die Menge an wasserlöslichem und öllöslichem Radikalinitiator jeweils 0,01 bis 5 Gew.-%, bezogen auf die Gesamtmonomerenmenge, beträgt.

**7.** Verfahren nach einem der Ansprüche 1 bis 6, **dadurch gekennzeichnet, dass** der Druck während der Polymerisation so gewählt wird, dass das Reaktionsgemisch zu keinem Zeitpunkt siedet.

**8.** Verfahren nach einem der Ansprüche 1 bis 7, **dadurch gekennzeichnet, dass** als wasserlöslicher Radikalinitiator ein Mono- oder Di-Alkalimetall- oder Ammoniumsalz der Peroxodischwefelsäure eingesetzt wird.

**9.** Verfahren nach einem der Ansprüche 1 bis 8, **dadurch gekennzeichnet, dass** als öllöslicher Radikalinitiator eine Verbindung ausgewählt aus der Gruppe umfassend tert.-Butylperoxi-2-ethylhexanoat (Trigonox® 21), tert.-Amylperoxi-2-ethylhexanoat, tert.-Butylperoxibenzoat (Trigonox® C), tert.-Amylperoxibenzoat, tert.-Butylperoxiacetat, tert.-Butylperoxi-3,5,5-trimethylhexanoat (Trigonox® 42 S), tert.-Butylperoxiisobutanoat, tert.-Butylperoxidiethylacetat, tert.-Butylperoxipivalat, tert.-Butylperoxiisopropylcarbonat, (Trigonox® BPIC) und tert.-Butylperoxi-2-ethylhexylcarbonat (Trigonox® 117) eingesetzt wird.

**10.** Verfahren nach einem der Ansprüche 1 bis 9, **dadurch gekennzeichnet, dass** das Reaktionsgemisch nach dem Ende der Monomerenzudosierung noch wenigstens 30 Minuten bei der Endreaktionstemperatur $T_E$ gehalten wird.

**11.** Verfahren nach einem der Ansprüche 1 bis 10, **dadurch gekennzeichnet, dass** das Reaktionsgemisch nach dem Ende der Monomerenzudosierung mit Inertgas und/oder Wasserdampf gestrippt wird.

## Claims

**1.** A process for the preparation of an aqueous polymer dispersion by free radical aqueous emulsion polymerization of at least one ethylenically unsaturated compound (monomer) in the presence of at least one dispersant, wherein

a) in a reaction vessel at a temperature which is less than or equal to the starting reaction temperature $T_s$,
$a_1$) at least one portion of demineralized water,
$a_2$) at least one portion of at least one oil-soluble free radical initiator,
$a_3$) at least one portion of at least one dispersant,
$a_4$) if appropriate, a portion of the at least one monomer and
$a_5$) if appropriate, a portion of at least one water-soluble free radical initiator are initially taken, thereafter
b) the reaction mixture obtained is, if appropriate, heated to the starting reaction temperature $T_S$, thereafter
c) the following are metered into the reaction mixture:
$c_1$) if appropriate, the remaining amount of demineralized water,
$c_2$) if appropriate, the remaining amount of the at least one oil-soluble free radical initiator,
$c_3$) if appropriate, the remaining amount of the at least one dispersant,
$c_4$) the total amount or, if appropriate, the remaining amount of the at least one monomer and
$c_5$) the main amount of the at least one water-soluble free radical initiator, and
d) the reaction mixture is heated to an end reaction temperature $T_E$ during the metering of the at least one

monomer,
water-soluble free radical initiators being understood as meaning those which have a solubility of ≥ 1% by weight at 20°C and atmospheric pressure in demineralized water, while oil-soluble free radical initiators being understood as meaning those which have a solubility of < 1% by weight under the abovementioned conditions and the total amount of water being such that the aqueous polymer dispersion obtained has a solids content of from 20 to 70% by weight.

2. The process according to claim 1, wherein the at least one water-soluble free radical initiator initiates a free radical polymerization reaction of the at least one monomer at the starting reaction temperature $T_S$.

3. The process according to either of claims 1 and 2, wherein the oil-soluble free radical initiator has a half-life of ≥ 10 hours at the starting reaction temperature $T_S$ and a half-life of ≤ 5 hours at the end reaction temperature $T_E$.

4. The process according to any of claims 1 to 3, wherein $T_E \geq T_s + 10°C$.

5. The process according to any of claims 1 to 4, wherein $T_S$ is from ≥ 30 to ≤ 120°C and $T_E$ is from ≥ 80 to ≤ 200°C.

6. The process according to any of claims 1 to 5, wherein the amount of water-soluble and oil-soluble free radical initiator is in each case from 0.01 to 5% by weight, based on the total amount of monomer.

7. The process according to any of claims 1 to 6, wherein the pressure during the polymerization is chosen so that the reaction mixture does not boil at any time.

8. The process according to any of claims 1 to 7, wherein the water-soluble free radical initiator used is a mono- or dialkali metal or ammonium salt of peroxodisulfuric acid.

9. The process according to any of claims 1 to 8, wherein the oil-soluble free radical initiator used is a compound selected from the group consisting of tert-butyl peroxy-2-ethylhexanoate (Trigonox® 21), tert-amyl peroxy-2-ethylhexanoate, tert-butyl peroxybenzoate (Trigonox® C), tert-amyl peroxybenzoate, tert-butyl peroxyacetate, tert-butyl peroxy-3,5,5-trimethylhexanoate (Trigonox® 42 S), tert-butyl peroxyisobutanoate, tert-butyl peroxydiethylacetate, tert-butyl peroxypivalate, tert-butyl peroxyisopropylcarbonate, (Trigonox® BPIC) and tert-butyl peroxy-2-ethylhexylcarbonate (Trigonox® 117).

10. The process according to any of claims 1 to 9, wherein the reaction mixture is kept at the end reaction temperature $T_E$ for at least a further 30 minutes after the end of the monomer metering.

11. The process according to any of claims 1 to 10, wherein the reaction mixture is stripped with inert gas and/or steam after the end of the monomer metering.

## Revendications

1. Procédé de préparation d'une dispersion polymère aqueuse par polymérisation en émulsion aqueuse initiée par voie radicalaire d'au moins un composé éthyléniquement insaturé (monomère) en présence d'au moins un agent dispersant, **caractérisé en ce que**:

a) on dépose préalablement dans un récipient réactionnel et à une température inférieure ou égale à la température initiale de la réaction $T_s$,
$a_1$) au moins une partie de la quantité d'eau désionisée,
$a_2$) au moins une partie de la quantité d'au moins un initiateur de radicaux solubles dans l'huile,
$a_3$) au moins une partie de la quantité d'au moins un agent dispersant,
$a_4$) éventuellement une partie de la quantité d'au moins un monomère, et
$a_5$) éventuellement une partie de la quantité d'au moins un initiateur de radicaux solubles dans l'eau, puis
b) on chauffe le mélange réactionnel obtenu éventuellement à la température initiale de la réaction $T_s$, et ensuite
c) on ajoute au mélange réactionnel
$c_1$) l'éventuelle partie restante de la quantité d'eau désionisée,
$c_2$) l'éventuelle partie restante de la quantité dudit au moins un initiateur de radicaux solubles dans l'huile,
$c_3$) l'éventuelle partie restante de la quantité dudit au moins un agent dispersant,

$c_4$) la quantité totale ou, selon le cas, l'éventuelle partie restante de la quantité dudit au moins un monomère, et
$c_5$) la majeure quantité totale dudit au moins un initiateur de radicaux solubles dans l'eau, et
d) on chauffe le mélange réactionnel pendant le dosage dudit au moins un monomère à une température finale de la réaction $T_E$, étant entendu par initiateurs de radicaux solubles dans l'eau, des radicaux qui présentent, à 20°C et à pression atmosphérique dans l'eau désionisée, une solubilité ≥ 1% en poids, tandis qu'on entend par initiateurs de radicaux solubles dans l'huile, des radicaux qui, dans les conditions susmentionnées, présentent une solubilité < 1% en poids, et la quantité totale d'eau est mesurée de telle sorte que la dispersion polymère aqueuse obtenue présente une teneur en solides de 20 à 70% en poids.

**2.** Procédé selon la revendication 1, **caractérisé en ce que** ledit au moins un initiateur de radicaux soluble dans l'eau initie à la température initiale de la réaction $T_S$ une réaction de polymérisation par voie radicalaire dudit au moins un monomère.

**3.** Procédé selon l'une des revendications 1 ou 2, **caractérisé en ce que** l'initiateur de radicaux soluble dans l'huile présente à la température initiale de la réaction $T_S$ une demi-vie ≥ 10 heures et à la température finale de la réaction $T_E$, une demi-vie ≤ 5 heures.

**4.** Procédé selon l'une des revendications 1 à 3, **caractérisé en ce que** $T_E \geq T_S + 10°C$.

**5.** Procédé selon l'une des revendications 1 à 4, **caractérisé en ce que** $T_S$ ≥ 30 à ≤ 120°C et $T_E$ ≥ 80 à ≤ 200°C.

**6.** Procédé selon l'une des revendications 1 à 5, **caractérisé en ce que** la quantité d'initiateur de radicaux soluble dans l'eau et soluble dans l'huile est de chaque fois 0, 01 à 5% en poids, par rapport à la quantité totale de monomère.

**7.** Procédé selon l'une des revendications 1 à 6, **caractérisé en ce que** la pression pendant la polymérisation est choisie de telle sorte que le mélange réactionnel n'entre en ébullition à aucun moment.

**8.** Procédé selon l'une des revendications 1 à 7, **caractérisé en ce qu'**on utilise comme initiateur de radicaux soluble dans l'eau un sel de métal monoalcalin ou dialcalin ou d'ammonium de l'acide peroxodisulfurique.

**9.** Procédé selon l'une des revendications 1 à 8, **caractérisé en ce qu'**on utilise comme initiateur de radicaux soluble dans l'huile, un composé choisi parmi le groupe constitué des t-butylperoxi-2-éthylhexanoate (Trigonox® 21), t-amylperoxi-2-éthylhexanoate, t-butylperoxibenzoate (Trigonox® C), t-amylperoxibenzoate, t-butylperoxiacétate, t-butylperoxi-3,5,5-triméthylhexanoate (Trigonox® 42 S), t-butylperoxiisobutanoate, t-butylperoxidiéthylacétate, t-butylperoxipivalate, t-butylperoxiisopropylcarbonate (Trigonox® BPIC) et t-butylperoxi-2-éthylhexylcarbonate (Trigonox® 117).

**10.** Procédé selon l'une des revendications 1 à 9, **caractérisé en ce que** le mélange réactionnel est maintenu à la fin du dosage du monomère encore au moins 30 minutes à la température finale de la réaction $T_E$.

**11.** Procédé selon l'une des revendications 1 à 10, **caractérisé en ce que** le mélange réactionnel est soumis à la fin du dosage de monomère à un strippage avec un gaz inerte et/ou de la vapeur d'eau.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 4003422 A
- EP 003957 B
- EP 028348 B
- EP 563726 B
- EP 764699 A
- US 4529753 A
- DE 3718520 A
- DE 3834734 A
- DE 4232194 A
- DE 19529599 A
- WO 9533775 A
- EP 767180 A
- DE 19839199 A
- DE 9840586 A1
- WO 0022003 A
- US 4269749 A
- EP 40419 B
- EP 567812 A
- EP 614922 A
- DE 4213965 A
- DE 2550023 A
- DE 2759097 C
- DE 2855146 C
- DE 2521780 C


### In der Beschreibung aufgeführte Nicht-Patentliteratur


- Encyclopedia of Polymer Science and Engineering. 1987, vol. 8, 659
- **D.C. BLACKLEY.** *High Polymer Latices,* 1966, vol. 1, 35
- **H. WARSON.** *The Applications of Synthetic Resin Emulsions,* 1972, 246
- **D. DIEDERICH.** *Chemie in unserer,* 1990, vol. 24, 135-142
- Methoden der organischen Chemie. **HOUBEN-WEYL.** Makromolekulare Stoffe. Georg-Thieme-Verlag, 1961, vol. XIV/1, 411-420
- Methoden der organischen Chemie. **HOUBEN-WEYL.** Makromolekulare Stoffe. Georg-Thieme-Verlag, 1961, vol. XIV/1, 192-208
- **J. BRANDRUP ; E.H. IMMERGUT ; E.A. GRULKE.** Polymer Handbook. J. Wiley & Sons, 1-76
- **J. BRANDRUP ; E.H. LMMERGUT.** Polymerhandbook. John Wiley & Sons, 1989, vol. II, 133-141
- Encyclopedia of Polymer Science and Technology. John Wiley & Sons Inc, 1966, vol. 5, 847
- **G. KANIG.** *Kolloid-Zeitschrift & Zeitschrift für Polymere,* vol. 190 (1), 1
- **T.G. FOX.** *Bull. Am. Phys. Soc.,* 1956, vol. II (1), 123
- Ullmann's Encyclopädie der technischen Chemie. Verlag Chemie, 1980, vol. 19, 18
- Ullmann's Ecyclopedia of Industrial Chemistry. VCH, 1992, vol. A21, 169
- **J. BRANDRUP ; E.H. IMMERGUT.** Polymer Handbook. J. Wiley, 1966
- POLYMER HANDBOOK. J.Wiley, 1975
- POLYMER HANDBOOK. J. Wiley, 1989